# EUROPEAN PATENT SPECIFICATION

(11) **EP 0 883 659 B1**
(45) Date of publication and mention of the grant of the patent: **24.05.2006**
(21) Application number: 97902851.1
(22) Date of filing: 15.01.1997
(51) Int. Cl.: C09K 3/14, B24D 3/28

(54) **RADIATION CURABLE SUPERSIZES**
STRAHLENHÄRTBARE ÜBERSCHICHT
SUPERCOUCHES D'APPRET POLYMERISABLES PAR EXPOSITION A UN RAYONNEMENT

(30) Priority: 26.02.1996 US 606614
(43) Date of publication of application: 16.12.1998
(73) Proprietor: NORTON COMPANY, Worcester, Massachusetts 01615-0138 (US)
(72) Inventor: SWEI, Gwo, Shin, East Amherst, NY 14051 (US); GAETA, Anthony, C., Lockport, NY 14094 (US)
(74) Representative: Richebourg, Michel François
(86) International application number: PCT/US1997/000220
(87) International publication number: WO 1997/031079

(56) References cited:
- EP-A- 0 213 738
- EP-A- 0 400 658
- US-A- 5 571 297
- DATABASE WPI Week 8844 Derwent Publications Ltd., London, GB; AN 88-310804 XP002030701 & JP 63 227 672 A (MITSUBISHI) , 21 September 1988

## Description

### Background to the Invention

The present invention relates to the production of coated abrasives and particularly to the production of coated abrasives bearing a supersize coating.

Supersize additives typically are chemicals that, under grinding conditions decompose to produce acid reacting materials such as halogens or halogen acids that react with a metal surface and make metal removal easier to accomplish. Typical additives are insoluble or very slightly soluble alkali metal salts of halo-acids and the most commonly encountered additives include potassium fluoroborate and cryolite. Other filler additives such as calcium carbonate or anti-loading or anti-static additives such as metallic stearates may also be incorporated into the supersize layer.

The additive is dispersed in a binder medium that ensures that the additive is present at the coated abrasive surface in the vicinity of the abrasive grains where the heat generated during grinding is the greatest.

A wide range of binder media have been used for maker and size coats including phenolic, urea/formaldehyde and epoxy resins. More recently binders that are radiation-curable such as acrylate-based resins including epoxyacryalates and acrylated urethanes have been proposed. Examples of patents and patent applications proposing such binders include EP 0 213 738 A1; EP 0 400 658-A3 ; and USP 5,571,297.

Generally the choice of binder for a supersize is determined by the requirement that the binder be compatible with, (in the sense of bonding readily to), the size that immediately underlies it. Since most teachings of supersize coatings have been in the context of coated abrasives with phenolic resin binder systems, the supersize binders have been phenolic which are of course aqueous-based. Such patents include British Patent 1,145,082; USP 3,541,739 and 5,110,321

EP A 0 569 952 discloses a grinding aid formulation that can be used as size and supersize coating on an abrasive product. The binders disclosed in that document are all used as aqueous dispersions. Some are radiation-curable. WO 94 / 238098 discloses a blend of a thermoplastic and of a thermoset resin as a binder. The examples show no liquid or hydrophobic binders and there is no indication whatsoever in the specification towards using such a binder.

Supersize coatings significantly enhance the grinding performance of coated abrasives by reducing the amount of heat generated, preventing glazing, extending the life of a coated abrasive material in addition to increasing the cut rate. They are particularly important in the grinding of difficult to grind materials such as stainless steel, titanium, nickel and aluminum. Clearly therefore the most preferred formulations contain the largest amount of the grinding aid that is feasible. Unfortunately when the binder medium is water-based as would be the case with a phenolic resin, epoxy or latex binder system for example, the amount of the grinding aid that can be incorporated is strictly limited because too much destabilizes the resin dispersion. In fact a typical supersize formulation incorporates only about 58% by weight of an additive such as potassium fluoroborate. In addition water soluble additives can not be used because they can cause rheology problems or because they precipitate out in the form of large crystals upon evaporation of the solvent. This is unfortunate since certain additives such as potassium fluoride, sodium fluoride, magnesium chloride and sodium nitrite would appear to be well suited to this application except for their high level of water solubility.

It has now been discovered that a much wider range of additives can be used in larger amounts or in formulations with a much longer pot life if the binder medium is appropriately chosen. The formulation of the present invention provides such a composition which, in addition to permitting a wider range and concentration of additives, can be more readily cured such that the production process can be significantly shortened.

### Description of the Invention

The present invention provides a supersize coating which comprises a supersize additive dispersed in a liquid, hydrophobic, radiation-curable binder medium. The invention also provides a coated abrasive incorporating such a supersize coating. Since the dispersion medium is the binder itself and since it is non-aqueous, the matter of destabilization of the formulation does not arise and supersize additives such as potassium fluoride that are not normally usable because of solubility concerns, can be employed.

The liquid, hydrophobic radaition-curable binder is preferably one that is curable by UV radiation though other formulations with other radiation curable mechanisms such as electron beam radiation are also acceptable. The binders that are particularly preferred include acrylated epoxy oligomers, such as the resins sold by UCB Radcure Inc under the trade names Ebecryl 3200, 3201, 3500, 3600, 3700 and 3800; acrylated urethane oligomers such as the resins sold by UCB Radcure Inc. under the trade names Ebecryl 230, 244, 8301, 8402 and 8803; polyester/acrylate oligomers such as the resins sold by UCB Radcure Inc under the trade names Ebecryl 40, 80, 81, 140, 150, 657, 810, 830, 870, 1657 and 2047; and in addition mixtures of such oligomers with mono-acrylated monomers, diacrylated monomers and poly-acrylated monomers which are typically added to adjust the physical properties, viscosity and/or molecular weight of the final product. Typical such additives are 1,6-hexanediol diacrylate (HDODA); trimethylolpropane ethoxy triacrylate (TMPEOTA); trimethylol propane triacrylate (TMPTA); and octyl decyl acrylate (ODA). Of these the most preferred include acrylated epoxy resins with a viscosity at ambient temperatures that makes it suitable for use as the carrier for a grinding aid. This generally implies a viscosity of at least 500 cps, and preferably from about 1500 to about 25,000 cps. As indicated above the viscosity can be adjusted by addition of acylated monomers. Ebecryl 3200 is an acrylated epoxy oligomer resin with a viscosity of from 1500 to 3000 cps. that has proved particularly effective in the formulations of the present invention.

The supersize additives include those typically used With conventional binder media such as KBF₄, cryolite, halohydrocarbons, iron sulfide and sodium fluorosilicate. However also included are those that have hitherto been considered unacceptable because of water solubility such as alkali metal halides and nitrites, magnesium halides, calcium hydrogen phosphate, as well as mixtures of two or more of any of the above additives.

The amount of the supersize additive that might be incorporated into the supersize formulation can be from about 15 to about 65, and particularly from about 35 to about 50% by weight based on the total weight of the additive and the binder.

The formulation can comprise other additives such as photoinitiators, (particularly where the binder is to be cured by UV radiation), free-radical generators, antistatic or anti-loading compounds, lubricants, colorants, fillers and the like without compromising the effectiveness or usefulness of the formulations of the invention.

### Description of Preferred Embodiments

The invention is now described with reference to the following illustrative examples which are not intended to imply any necessary limitation on the essential scope of the present invention.

### Example 1

This Example compares the performance of various abrasive discs according to the invention with prior art discs using the Schieffer test. In this test a disc about 11.4cm in diameter is attached to a backup support pad using a ring-clamping device in a horizontal position. A cylindrical workpiece made of 304 stainless steel with an outside diameter of 2.54cm, wall thickness of 3.05mm and a length of 5.08cm is then moved into contact with the pad at a predetermined constant force and is rotated for a predetermined number of revolutions. In the present case the force chosen was 7 lbs (32 newtons) and the number of revolutions was set at 500.

After this had been completed, the difference in weights of both the workpiece and the disc were measured and recorded.

The test was carried out on discs prepared in identical ways except for the supersize coating. In the disc identified as C-1, no supersize application was used. In disc C-2 a conventional supersize coat comprising the maximum weight of potassium fluoroborate that could be used without destabilizing the formulation was used. This formulation contained 58% by weight but had a pot life of only about 6 hours. The additive was dispersed in a standard water-based phenolic resin. In discs I-1 through I-11 the same hydrophobic UV-curable Ebecryl 3200 acrylated epoxy oligonmer resin was used as the binder resin. In each case the amount of the indicated supersize additive was 40% by weight, based on the total weight of the binder plus additive. The formulation also contained 1.21 wt% of a photoinitiator, (Ciba 1173).

Three iterations were averaged for each disc and the results are reported in Table 1 below.

**TABLE 1**

| SAMPLE | COMPOSITION/ (WT. PROPS | TOTAL GM CUT | % CONTROL |
|---|---|---|---|
| CONTROL | NONE | 0.43 | 100% |
| INV-1 | KBF₄ (100%) | 0.56 | 130% |
| INV-2 | FeS₂/TMDS/MKCS (45/5/50) | 0.54 | 126% |
| INV-3 | FeS₂/MKCS/Zn (40/40/20) | 0.84 | 195% |
| INV-4 | MoS₂ | 0.67 | 156% |
| INV-5 | FeS₂/CaHPO₄/KCl | 0.72 | 167% |
| | (50/25/25) | | |
| INV-6 | FeS₂/MnO₂/KCl | 0.62 | 144% |
| | (50/25/25) | | |
| INV-7 | TDMS/MKCS | 0.56 | 130% |
| | (50/50) | | |
| INV-8 | Na₂SF₆/MKCS | 0.55 | 128% |
| | (50/50) | | |
| INV-9 | FeS₂/Na₃AlF₆ | 0.77 | 180% |
| | (50/50) | | |
| INV-10 | KBF₄/KF | 1.24 | 288% |
| INV-11 | FeS₂/K₃PO₄/KCl | 0.70 | 163% |
| | (50/25/25) | | |

In the above Table the abbreviations used (other than the conventional chemical formulae) have the following meanings:
TMDS....tetramethylthiuram disulfide (available from Aldrich Chemical Co.)
MKC-S....is a complex of potassium and manganese chlorides, (available from BBU Chemie GmbH, Austria)

As will be seen from the above Table, the supersize formulations of the invention performed extremely well in increasing the amount of metal removed. Grinding aids such as potassium chloride and potassium phosphate are very soluble in water and cannot be used in an aqueous medium. However as will be observed, they are components of the most effective grinding aid formulations.

## Claims

1. A supersize coating formulation obtainable by dispersing, in the absence of water, a supersize additive selected from the group consisting of potassium fluoroborate, sodium fluorosilicate, potassium fluoride, iron sulfide, potassium phosphate, molybdenum disulfide, calcium hydrogen phosphate, and combinations thereof and, optionally, further additives selected from the group consisting of photoinitiators, free-radical generators, anti-static additives, lubricants, fillers, and combinations thereof in a liquid, hydrophobic, radiation-curable binder.

2. A coating formulation according to Claim 1 wherein the binder consists essentially of a UV-curable liquid formulation.

3. A coating formulation according to any one of Claims 1 or 2 wherein the binder comprises at least one UV-curable oligomer selected from the group consisting of acrylated epoxy oligomers, acrylated urethane oligomers and acrylated polyester oligomers and mixtures thereof.

4. A coating formulation according to any one of Claims 1 to 3 wherein the supersize additive is present in an amount that is from about 25 to about 65% by weight, based on the total weight of the binder and supersize additive.

5. A coating formulation according to any one of Claims 1 to 4 wherein the binder is selected from the group consisting of acrylated epoxy oligomers and mixtures of such oligomers with acrylated monomers having a viscosity of from about 1,000 to 3,000 cps at 25°C.

6. A coating formulation according to any one of Claims 1 to 5 wherein the binder is selected from the group consisting of acrylated epoxy oligomers and mixtures thereof with acrylated monomers.

7. A coated abrasive incorporating a supersize coating formulation according to Claim 1 wherein the supersize coating formulation has been radiation cured.

## Patentansprüche

1. Supersizebeschichtungsformulierung, erhältlich durch Dispergieren in Abwesenheit von Wasser eines Supersizeadditivs, ausgewählt aus der Gruppe, bestehend aus Kaliumfluorborat, Natriumfluorsilikat, Kaliumfluorid, Eisensulfid, Kaliumphosphat, Molybdändisulfid, Calciumhydrogenphosphat und Kombinationen davon, und gegebenenfalls weiterer Additive, ausgewählt aus der Gruppe, bestehend aus Photoinitiatoren, Erzeugern freier Radikale, Antistatikadditiven, Gleitmitteln, Füllstoffen und Kombinationen davon, in einem flüssigen, hydrophoben, durch Strahlung härtbaren Bindemittel.

2. Beschichtungsformulierung nach Anspruch 1, wobei das Bindemittel im Wesentlichen aus einer UV-härtbaren flüssigen Formulierung besteht.

3. Beschichtungsformulierung nach einem der Ansprüche 1 oder 2, wobei das Bindemittel mindestens ein UV-härtbares Oligomer umfasst, ausgewählt aus der Gruppe, bestehend aus acrylierten Epoxyoligomeren, acrylierten Urethanoligomeren und acrylierten Polyesteroligomeren, und Gemischen davon.

4. Beschichtungsformulierung nach einem der Ansprüche 1 bis 3, wobei das Supersizeadditiv in einer Menge von etwa 25 bis etwa 65 Gew.-%, bezogen auf das Gesamtgewicht des Bindemittels und des Supersizeadditivs, vorhanden ist.

5. Beschichtungsformulierung nach einem der Ansprüche 1 bis 4, wobei das Bindemittel ausgewählt ist aus der Gruppe, bestehend aus acrylierten Epoxyoligomeren und Gemischen derartiger Oligomere mit acrylierten Monomeren, mit einer Viskosität von etwa 1.000 bis 3.000 cps bei 25°C.

6. Beschichtungsformulierung nach einem der Ansprüche 1 bis 5, wobei das Bindemittel ausgewählt ist aus der Gruppe, bestehend aus acrylierten Epoxyoligomeren und Gemischen davon mit acrylierten Monomeren.

7. Beschichteter Schleifstoff, enthaltend eine Supersizebeschichtungsformulierung nach Anspruch 1, wobei die Supersizebeschichtungsformulierung durch Strahlung gehärtet worden ist.

## Revendications

1. Formulation de surenrobage ("supersize") qui peut être obtenue en dispersant, en l'absence d'eau, un additif de surenrobage choisi dans le groupe comprenant le fluoroborate de potassium, le fluosilicate de sodium, le fluorure de potassium, le sulfure de fer, le phosphate de potassium, le disulfure de molybdène, le phosphate d'hydrogène de calcium, et des combinaisons de ceux-ci, et en option, d'autres additifs choisis dans le groupe comprenant les photoinitiateurs, générateurs de radicaux libres, additifs antistatiques, lubrifiants, charges, et des combinaisons de ceux-ci dans un liant liquide, hydrophobe, durcissable par rayonnement.

2. Formulation d'enrobage selon la revendication 1 dans laquelle le liant consiste essentiellement en une formulation liquide durcissable par UV.

3. Formulation de revêtement selon l'une des revendications 1 ou 2 dans laquelle le liant comprend au moins un oligomère durcissable par UV choisi dans le groupe comprenant des oligomères époxy acrylés, des oligomères d'uréthane acrylés et des oligomères de polyester acrylés et des mélanges de ceux-ci.

4. Formulation d'enrobage selon l'une quelconque des revendications 1 à 3 dans laquelle l'additif de surenrobage est présent dans une quantité allant d'environ 25 à environ 65 % en poids, sur la base du poids total du liant et de l'additif de surenrobage.

5. Formulation d'enrobage selon l'une quelconque des revendications 1 à 4 dans laquelle le liant est choisi dans le groupe composé des oligomères époxy acrylés et les mélanges de ces oligomères avec des monomères acrylés ayant une viscosité d'environ 1000 à 3000 cps à 25° C.

6. Formulation d'enrobage selon l'une quelconque des revendications 1 à 5 dans laquelle le liant est choisi dans le groupe comprenant les oligomères époxy acrylés et des mélanges de ceux-ci avec des monomères acrylés.

7. Abrasif enrobé comportant une formulation de surenrobage selon la revendication 1 dans laquelle la formulation de surenrobage a été durcie par rayonnement.
